# EUROPÄISCHE PATENTSCHRIFT

(11) **EP 2 714 436 B1**
(45) Veröffentlichungstag und Bekanntmachung des Hinweises auf die Patenterteilung: **29.06.2016**
(21) Anmeldenummer: 12713667.9
(22) Anmeldetag: 29.03.2012
(51) Int. Cl.: B60D 1/24

(54) **ANORDNUNG ZUR VERBINDUNG EINES ZUGFAHRZEUGS MIT EINEM ANHÄNGER**
ASSEMBLY FOR CONNECTING A TRACTION VEHICLE TO A TRAILER
ENSEMBLE POUR RELIER UN VÉHICULE TRACTEUR ET UNE REMORQUE

(30) Priorität: 24.05.2011 DE 102011076392
(43) Veröffentlichungstag der Anmeldung: 09.04.2014
(73) Patentinhaber: Robert Bosch GmbH, 70442 Stuttgart (DE)
(72) Erfinder: WELLHOEFER, Matthias Marcus, 70499 Stuttgart (DE); SIEFKE, Stefanie, 70374 Stuttgart (DE)
(86) Internationale Anmeldenummer: PCT/EP2012/055705
(87) Internationale Veröffentlichungsnummer: WO 2012/159805

(56) Entgegenhaltungen:
- EP-A2- 2 280 263
- WO-A1-2011/050796
- DE-A1-102009 034 678
- DE-A1-102009 053 266

## Beschreibung

### Stand der Technik

Die Erfindung geht aus von einer Anordnung zur Verbindung eines Zugfahrzeugs mit einem Anhänger nach der Gattung des unabhängigen Patentanspruchs 1.

In der DE 10 2006 030 001 A1 wird beispielsweise eine Anordnung zur Verbindung eines Zugfahrzeugs mit einem Anhänger beschrieben, welche eine zugfahrzeugseitige Kupplungseinheit und eine anhängerseitige Kupplungseinheit umfasst. Bei der beschriebenen Verbindungsanordnung ist der zugfahrzeugseitigen Kupplungseinheit eine Messeinrichtung zugeordnet, welche die auf die zugfahrzeugseitige Kupplungseinheit in mindestens eine Richtung wirkende Kraft erfasst und auswertet.

In der DE 20 2007 008 391 U1 wird beispielsweise eine Anordnung zur Verbindung eines Zugfahrzeugs, wie beispielsweise eines Personenkraftwagens, mit einem Anhänger, wie beispielsweise einem Wohnwagen, beschrieben. Die beschriebene Verbindungsanordnung umfasst eine Anhängerkupplung, bei welcher eine an der Anhängerdeichsel vorgesehene Kugelpfanne mit einem am Zugfahrzeug angeordneten Zughaken, welcher als Gegenstück ein kugelförmiges Kupplungsteil aufweist, in einen drehgelenkigen Eingriff gebracht werden kann. Zum Bestimmen der Stützlastgewichte des Anhängers ist eine Messeinrichtung in die Kugelkopfanhängerkupplung integriert.

Aus der DE 10 2009 053266 A1 ist ein gattungsgemäße Vorrichtung und ein Verfahren zum Ermitteln der auf eine Anhängerkupplung wirkenden Stützlast bekannt. Aufgabe der Erfindung ist es, unter Erhöhung des Nutzungskomforts einer Überschreitung einer zulässigen Stützlast entgegenzuwirken und dadurch die Sicherheit im Straßenverkehr zu erhöhen. Erfindungsgemäß sind dazu vorgesehen: - - eine Sensoreinrichtung, die eine infolge der Aufbringung einer Stützlast eintretende Änderung der Fahrzeuglage gegenüber einer Fahrzeugstandfläche bestimmt, - - Skalierungsdaten, die den Zusammenhang zwischen jeweils wirkender Stützlast und jeweiliger Änderung der Fahrzeuglage gegenüber einer Fahrzeugstandfläche repräsentieren, - - und eine Verarbeitungseinheit, die aus der ermittelten Änderung der Fahrzeuglage unter Heranziehung der Skalierungsdaten die aktuell wirkende Stützlast ermittelt Aus der DE 10 2006 004 963 A1 ist beispielsweise eine Anordnung zur Verbindung eines Zugfahrzeugs mit einem Anhänger bekannt, welche eine Anhängerkupplung umfasst. Um die beim Ziehen der Last auftretenden Kräfte zu erfassen, ist die Anhängerkupplung mit einer Messeinrichtung versehen. Die Messeinrichtung umfasst ein erstes Bauteil und ein zweites Bauteil. Hierbei ist das erste Bauteil gegen die Kraft einer Federvorrichtung relativbeweglich zum zweiten Bauteil angeordnet, wobei die Federvorrichtung als rotationssymmetrische Feder ausgeführt ist. Die relative Position des ersten Bauteils zum zweiten Bauteil kann induktiv und/oder kapazitiv und/oder nach dem Wirbelstromprinzip ermittelt werden.

In der DE 100 30 128 A1 wird beispielsweise eine Anordnung zur Verbindung eines Zugfahrzeugs mit einem Anhänger beschrieben, bei welcher der Anhänger über eine Deichsel an das Zugfahrzeug angehängt ist. Das Zugfahrzeug und der Anhänger bilden einen Fahrzeugverbund, bei welchem zur Vermeidung von dynamischen Fahrinstabilitäten im Zugfahrzeug eine Sensorik zur Erfassung von Differenzen zwischen dem Kurswunsch des Fahrers und der tatsächlichen Fahrzeugbewegung vorgesehen ist, wobei eine Differenz zwischen Soll- und Ist-Bewegung zur Abbremsung einzelner Räder der Anhängerachse führt. Durch das Abbremsen des Anhängers streckt sich der gesamte Zug, wodurch die Gefahr des Einknickens im Deichselgelenk signifikant reduziert werden soll.

### Offenbarung der Erfindung

Die erfindungsgemäße Anordnung zur Verbindung eines Zugfahrzeugs mit einem Anhänger mit den Merkmalen des unabhängigen Patentanspruchs 1 hat demgegenüber den Vorteil, dass die Messeinrichtung mit einer Wegfahrsperre gekoppelt ist, welche eine Inbetriebnahme und/oder ein Inbewegungsetzen des Zugfahrzeugs verhindert, wenn die von der Messeinrichtung erfasste Kraft und/oder eine daraus ermittelte physikalische Größe einen vorgegebenen Schwellwert überschreitet. In vorteilhafter Weise erhält der Fahrer des Fahrzeugs hierdurch vor der Inbetriebnahme des Fahrzeugs eine Information, ob die gemessene Belastung des Anhängers unterhalb des zulässigen oder oberhalb des zulässigen Schwellwerts liegt bzw. ob der Anhänger das maximal zulässige Gewicht überschreitet oder nicht. Bei einer Überschreitung des zulässigen Schwellwerts kann der Fahrer das Fahrzeug nicht in Betrieb nehmen bzw. nicht in Bewegung setzen und der Fahrer muss das auf den Anhänger lastende Gewicht verringern. Ist die gemessene Belastung auf die Kupplungseinheit des Zugfahrzeugs bzw. die erfasste Kraft und/oder eine daraus ermittelte physikalische Größe unterhalb des zulässigen Schwellwerts, dann kann das Fahrzeug in Betrieb genommen werden und der Fahrer weiß, dass der Anhänger nicht überladen ist. Somit wird in vorteilhafter Weise systematisch vor Antritt der Fahrt bewusst eine Gefahrenquelle beseitigt, wodurch Gefahrensituationen durch Überladung des Anhängers vermieden werden können und die Unfallgefahr gesenkt werden kann. Durch die Überwachungsfunktion der Messeinrichtung kann in vorteilhafter Weise eine extreme Überlastung des Fahrzeugverbunds bzw. der gesamten Anhängerkupplungsanordnung und der Hinterachse des Zugfahrzeugs nahezu ausgeschlossen werden. Generell ist die erfindungsgemäße Anordnung für den Fahrer eine hilfreiche Einrichtung, welche die Sicherheit im Alltagsbetrieb verbessert, indem der Fahrer insbesondere bereits vor Fahrtantritt vor einer Überladung des Anhängers gewarnt und dadurch die Unfallgefahr gesenkt werden kann.

Durch die in den abhängigen Ansprüchen aufgeführten Maßnahmen und Weiterbildungen sind vorteilhafte Verbesserungen der im unabhängigen Patentanspruch 1 angegebenen Anordnung zur Verbindung eines Zugfahrzeugs mit einem Anhänger möglich.

Besonders vorteilhaft ist, dass die Messeinrichtung die Kraftmessung beim Einschalten einer Zündung und/oder während des Fahrbetriebs und/oder im Stillstand des Zugfahrzeugs durchführt, wobei die Messeinrichtung die Wegfahrsperre nur bei einem erkannten Fahrzeugstillstand aktiviert. Hierdurch erfolgt durch die Kraftmessung vorzugsweise eine permanente Kontrolle der auf die Verbindungsanordnung wirkenden Belastung bereits zu Beginn des Startvorgangs des Fahrzeugs und während des ganzen Betriebs des Fahrzeugs. In vorteilhafter Weise ist die Messeinrichtung derart ausgestaltet, dass die Wegfahrsperre des Fahrzeugs während der Fahrt dem aktiven Fahrbetrieb untergeordnet ist bzw. während der Fahrt nicht aktiviert werden kann. Die Messeinrichtung kann lediglich dann aktiv in die Motorsteuerung des Fahrzeugs eingreifen, wenn sich das Fahrzeug im Stillstand befindet. Dadurch kann die Inbetriebnahme und/oder ein Inbewegungsetzen des Zugfahrzeugs bereits vor Fahrantritt verhindert werden, wenn eine Überlastung der zugfahrzeugseitigen Kupplungseinheit erkannt wird. Somit erfolgt, unabhängig von der Belastungshöhe auf die zugfahrzeugseitige Kupplungseinheit, während der Fahrt kein aktiver Eingriff der Wegfahrsperre in das Fahrgeschehen.

In vorteilhafter Ausgestaltung der Erfindung, kann die Messeinrichtung die erfassten Werte mit zulässigen Maximalwerten für eine Anhängelast und/oder eine Stützlast vergleichen, welche für das Zugfahrzeug vorgegeben sind. In vorteilhafter Weise können hierdurch tatsächlich auftretende Werte für eine Anhängelast und/oder eine Stützlast im Stillstand und während des Fahrbetriebs ausgewertet werden, um überlastbedingte Schäden an der Anhängerkupplungsanordnung bzw. am Fahrzeug zu verhindern. Des Weiteren können gefährliche Fahrsituationen durch Überladung des Anhängers vermieden werden. Zudem kann die Messeinrichtung in vorteilhafter Weise an unterschiedliche Fahrzeuge, Bedingungen, Schwellwerte und andere wichtige Parameter angepasst werden.

In weiterer vorteilhafter Ausgestaltung der Erfindung, kann die Wegfahrsperre zur Verhinderung der Inbetriebnahme und/oder der Bewegung des Zugfahrzeugs über eine entsprechende Schnittstelle mit einer Zündungseinrichtung und/oder einer Kraftstoffzufuhreinrichtung und/oder einem Motorsteuergerät und/oder einer Pedaleinrichtung gekoppelt werden. In vorteilhafter Weise können hierdurch die Steuersignale direkt zu einer dem Motor vorgeschalteten Blockiereinrichtung übermittelt werden, wodurch eine schnelle Umsetzung der Steuersignale und eine schnelle Aktivierung der Wegfahrsperre erfolgen kann.

In weiterer vorteilhafter Ausgestaltung der Erfindung, kann die Messeinrichtung die erfassten Werte dem Fahrer des Zugfahrzeugs über mindestens eine Ausgabeeinheit anzeigen. In vorteilhafter Weise kann hierdurch der Fahrer vor und während der Fahrt ständig über den aktuellen Belastungszustand an der Anhängerkupplungsanordnung informiert werden. Entsprechend der auf der Ausgabeeinheit angezeigten Belastungswerte kann der Fahrer seine Fahrweise anpassen. Als Ausgabeeinheit können beliebige optische, akustische und/oder haptische Ausgabevorrichtungen verwendet werden. So können beispielsweise ohnehin im Fahrzeug vorhandene Bildschirme und/oder Sprachausgabesysteme zur Ausgabe der aktuellen Belastungswerte verwendet werden.

Besonders vorteilhaft ist, dass die Messeinrichtung vor der Aktivierung der Wegfahrsperre über die mindestens eine Ausgabeeinheit eine Warnung an den Fahrer des Zugfahrzeugs ausgeben kann. Dadurch kann dem Fahrer in vorteilhafter Weise immer rechtzeitig eine Information über den Belastungszustand der Anhängerkupplungsanordnung ausgegeben werden, insbesondere vor einer Inbetriebnahme und/oder einem Inbewegungsetzen des Zugfahrzeugs. Somit kann auch ein unkundiger Fahrer auf eine unsachgemäße Beladung des Anhängers hingewiesen und über die Ausgabeeinheit informiert bzw. aufgefordert werden, diesen Zustand vor Fahrtantritt zu beheben. Auch die Warnung kann optisch, akustisch und/oder haptisch über ohnehin im Fahrzeug vorhandene Ausgabesysteme ausgegeben werden.

In weiterer vorteilhafter Ausgestaltung der Erfindung, kann die Messeinrichtung auch während des Fahrbetriebs über die mindestens eine Ausgabeeinheit eine Warnung an den Fahrer des Zugfahrzeugs ausgeben, wenn die während des Fahrbetriebs erfassten Werte die zulässigen Maximalwerte für die Anhängelast und/oder die Stützlast überschreiten. In vorteilhafter Weise kann der Fahrer in Echtzeit einen Hinweis erhalten, dass die Zuladung bei dynamischer Fahrweise kritisch ist und sein Fahrverhalten geändert und/oder die Geschwindigkeit und/oder die Beladung reduziert werden sollte. So kann der Fahrer rechtzeitig Gegenmaßnahmen gegen Nickverhalten und/oder Schlingerverhalten des Anhängers einleiten und dadurch Gefahrensituationen vermeiden.

In weiterer vorteilhafter Ausgestaltung der Erfindung kann die Messeinrichtung die erfassten Werte an eine Auswerte- und Steuereinheit weiterleiten, welche Stellsignale für mindestens eine Stabilisierungsfunktion des Zugfahrzeugs erzeugt. Dies hat den Vorteil, dass während des Fahrbetriebs permanent Messungen und Auswertungen der Stellsignale des Zugfahrzeugs stattfinden können, um einen sicheren Fahrbetrieb des Fahrzeugverbunds zu gewährleisten. Um bei Überladung des Anhängers eine Eskalation der Fahrsituation zu vermeiden, können die erfassten Werte unmittelbar ausgewertet werden, um sofort Stabilisierungsmaßnahmen einzuleiten, wodurch die Sicherheit des Zugfahrzeugs erhöht werden kann.

Eine bevorzugte Realisierung der erfindungsgemäßen Anordnung sieht vor, dass die zugfahrzeugseitige Kupplungseinheit fest oder abnehmbar mit dem Aufbau des Zugfahrzeugs verbunden ist, wobei bei einer abnehmbaren Ausführung die zugfahrzeugseitige Kupplungseinheit über die Messeinrichtung mit einem Aufbau des Zugfahrzeugs verbunden ist. In vorteilhafter Weise kann die Messeinrichtung bei einer fest mit dem Aufbau des Zugfahrzeugs verbundenen zugfahrzeugseitigen Kupplungseinheit je nach Modell innerhalb des Aufbaus oder innerhalb der Kupplungseinheit angeordnet sein. Hierdurch ergeben sich in vorteilhafter Weise bei kleinerem Bauraumbedarf sowie geringerem Gewicht der erfindungsgemäßen Kupplungseinheit mehrere Möglichkeiten eine Messeinrichtung im Zugfahrzeug zu integrieren sowie eine deutliche Material- und Kostenersparnis, da auf zusätzliche Befestigungselemente verzichtet werden kann.

In weiterer vorteilhafter Ausgestaltung der Erfindung, kann die Messeinrichtung als iBolt-Einheit ausgeführt werden, welche mindestens einen absolut messenden Sensor aufweist. Die erfindungsgemäße Ausgestaltung der Messeinrichtung ermöglicht die Verwendung eines bereits bei Kraftfahrzeugen eingesetzten Messprinzips bzw. eines Kraftmesselements ohne einen erheblichen Zusatzaufwand zu betreiben, da hierfür eine konventionelle weit verbreitete iBolt-Einheit eingesetzt werden kann. Der Einsatz einer solchen Kraftmesseinheit ergibt die Möglichkeit eine Kraft in Vertikalrichtung zu erfassen, wobei Momente sowie Kräfte um die beiden Horizontalrichtungen kompensiert und unterdrückt werden können. Somit ergibt sich eine genaue Ermittlung der in der Kupplungseinheit während des Fahrbetriebs wirkenden Kraft. Die iBolt-Einheit ist ohne großen Aufwand zur Nachrüstung geeignet. Vorzugsweise ergibt sich somit durch den Einsatz einer iBolt-Einheit eine Einsparung von Entwicklungskosten, da keine großen Änderungen an bestehenden Kupplungseinheiten vorzusehen sind.

Ein Ausführungsbeispiel der Erfindung ist in der Zeichnung dargestellt und wird in der nachfolgenden Beschreibung näher erläutert.

### Kurze Beschreibung der Zeichnungen

Figur 1 zeigt eine schematische Darstellung eines Ausschnitts einer Seitenansicht eines Zugfahrzeugs mit einem Ausführungsbeispiel einer erfindungsgemäßen Anordnung zur Verbindung des Zugfahrzeugs mit einem Anhänger, welche eine mit einer Wegfahrsperre gekoppelte Messeinrichtung aufweist.

Figur 2 zeigt ein Blockdiagramm des Zugfahrzeugs aus Fig. 1 mit der erfindungsgemäßen Anordnung zur Verbindung des Zugfahrzeugs mit einem Anhänger.

### Ausführungsformen der Erfindung

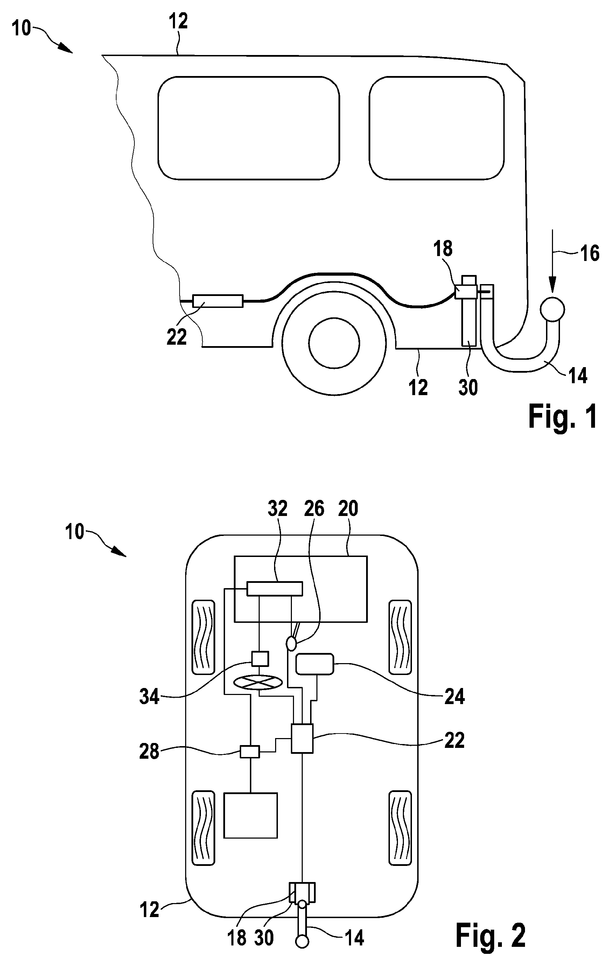

Fig. 1 und 2 zeigen jeweils ein Zugfahrzeug 10 mit einem Ausführungsbeispiel einer erfindungsgemäßen Anordnung zur Verbindung des Zugfahrzeugs 10 mit einem Anhänger. Die Verbindungsanordnung umfasst eine zugfahrzeugseitige Kupplungseinheit 14 und eine nicht dargestellte anhängerseitige Kupplungseinheit. Wie aus Fig. 1 und 2 ersichtlich ist, ist der zugfahrzeugseitigen Kupplungseinheit 14 eine Messeinrichtung 18 zugeordnet, welche die auf die zugfahrzeugseitige Kupplungseinheit 14 wirkende Kraft in mindestens einer Richtung 16 erfasst und auswertet. Alternativ hierzu kann die Messeinrichtung 18 zur Erfassung und Auswertung der auf die zugfahrzeugseitige Kupplungseinheit 14 wirkenden Kraft auch der anhängerseitigen Kupplungseinheit zugeordnet sein.

Um eine Überlastung eines aus Zugfahrzeug 10 und Anhänger bestehenden Fahrzeugverbundes zu verhindern, ist die Messeinrichtung 18 erfindungsgemäß mit einer Wegfahrsperre 22 gekoppelt, welche eine Inbetriebnahme und/oder ein Inbewegungsetzen des Zugfahrzeugs 10 verhindert, wenn die von der Messeinrichtung 18 erfasste Kraft und/oder eine daraus ermittelte physikalische Größe einen vorgegebenen Schwellwert überschreiten. Vorzugsweise wird eine in vertikaler Richtung 16 auf die zugfahrzeugseitige Kupplungseinheit 14 der Anordnung wirkende Kraft erfasst. Hierzu ist die Messeinrichtung 18 innerhalb der zugfahrzeugseitigen Kupplungseinheit 14 oder in einer mit einem Aufbau 12 des Zugfahrzeugs 10 verbundenen Halteeinrichtung 30 für die zugfahrzeugseitige Kupplungseinheit 14 angeordnet.

Die zugfahrzeugseitige Kupplungseinheit 14 ist fest oder abnehmbar mit dem Aufbau 12 des Zugfahrzeugs 10 verbunden, wobei bei einer abnehmbaren Ausführung die zugfahrzeugseitige Kupplungseinheit 14 über die Messeinrichtung 18 mit einem Aufbau 12 des Zugfahrzeugs 10 verbunden ist. Selbstverständlich ist auch eine andere Lage der Messeinrichtung 18 oder eine andere Anbindung der Messeinrichtung 18 am Aufbau 12 des Zugfahrzeugs 10 denkbar. Alternativ kann die Messeinrichtung 18 auch in die anhängerseitige fest oder abnehmbar ausgeführte Kupplungseinheit integriert werden, so dass die Messeinrichtung 18 innerhalb der anhängerseitigen Kupplungseinheit oder in einer mit einem Aufbau des Anhängers verbundenen Halteeinrichtung für die anhängerseitige Kupplungseinheit angeordnet ist. Ebenfalls kann bei einer abnehmbaren Ausführung die anhängerseitige Kupplungseinheit über die Messeinrichtung 18 mit dem Aufbau des Anhängers verbunden werden. Bevorzugt ist die abnehmbare Kupplungseinheit mit einem hier nicht dargestellten Schnellverschluss ausgerüstet.

Die Messeinrichtung 18 führt die Kraftmessung beim Einschalten einer Zündung und/oder während des Fahrbetriebs und/oder im Stillstand des Zugfahrzeugs 10 durch, wobei die Messeinrichtung 18 die Wegfahrsperre 22 nur bei einem erkannten Fahrzeugstillstand aktiviert.

Die Messeinrichtung 18 vergleicht die erfassten Werte mit zulässigen Maximalwerten für eine Anhängelast und/oder eine Stützlast, welche für das Zugfahrzeug 10 vorgegeben sind. Wenn der Maximalwert für eine Anhängelast und/oder eine Stützlast auf die zugfahrzeugseitige Kupplungseinheit 14 überschritten wird, sorgt eine Logikeinrichtung, beispielsweise eine Auswerte- und Steuereinheit dafür, dass das Zugfahrzeug 10 nicht in Betrieb genommen bzw. nicht in Bewegung gesetzt werden kann. Hierzu ist die Messeinrichtung 18 beispielsweise mit einem Steuergerät verbunden, welches beispielsweise als Motorsteuergerät (ECU) 32, Airbagsteuergerät oder als Domain-Control-Unit (DCU) ausgebildet sein kann, wobei die beschriebene Funktionalität auch in andere Steuergeräte integriert werden kann.

Die Wegfahrsperre 22 ist zur Verhinderung der Inbetriebnahme und/oder der Bewegung des Zugfahrzeugs 10 im dargestellten Ausführungsbeispiel mit einer Zündungseinrichtung 34 und/oder einer Kraftstoffzufuhreinrichtung 28 und/oder dem Motorsteuergerät 32 und/oder einer Pedaleinrichtung 26 des Zugfahrzeugs 10 gekoppelt. Somit kann die Wegfahrsperre 22 zur Verhinderung der Inbetriebnahme und/oder der Bewegung des Zugfahrzeugs 10 beispielsweise die Zündung unterbrechen, den Motor 20 abschalten und/oder die Kraftstoffzufuhr unterbrechen bzw. verhindern.

In vorteilhafter Weise zeigt die Messeinrichtung 18 die erfassten Werte dem Fahrer des Zugfahrzeugs 10 über mindestens eine optische, akustische und/oder haptische Ausgabeeinheit 24 an. Somit ergibt sich eine Komfortfunktion, welche dem Fahrer in Echtzeit die erfassten Werte vorzugsweise auf einem Display bzw. Bildschirm anzeigt und/oder über ein Sprachausgabesystem ausgibt, so dass der Fahrer jederzeit weiß, ob der erfasste Wert oberhalb oder unterhalb des vorgegebenen Schwellwertes liegt und er Last verringern muss oder noch Last zuladen kann. So kann dem Fahrer beispielsweise auch direkt das Gewicht ausgegeben werden, um welches der Schwellwert überschritten bzw. unterschritten wird.

Bevorzugt gibt die Messeinrichtung 18 vor der Aktivierung der Wegfahrsperre 22 über die mindestens eine Ausgabeeinheit 24 eine Warnung an den Fahrer des Zugfahrzeugs 10 aus. Die Warnung kann beispielsweise optisch über ein Display bzw. Bildschirm, akustisch über ein Sprachausgabesystem bzw. einen Tongenerator oder haptisch durch Einleiten von Vibrationen in das Lenkrad und/oder die Pedaleinrichtung 26 erfolgen. Des Weiteren gibt die Messeinrichtung 18 im dargestellten Ausführungsbeispiel während des Fahrbetriebs über die mindestens eine Ausgabeeinheit 24 eine Warnung an den Fahrer des Zugfahrzeugs 10 aus, wenn die während des Fahrbetriebs erfassten Werte die zulässigen Maximalwerte für die Anhängelast und/oder die Stützlast überschreiten. Im kontinuierlichen Messbetrieb während der Fahrt kann der zulässige Maximalwert beispielsweise durch Nicken des aus Zugfahrzeug 10 und Anhänger bestehenden Fahrzeugverbunds temporär überschritten werden. Passiert dies zu häufig, so kann der Fahrer des Zugfahrzeugs 10 eine Warnung erhalten, dass die Zuladung im dynamischen Verhalten des Fahrzeugverbundes kritisch ist und reduziert werden sollte.

Zusätzlich kann die Messeinrichtung 18 die erfassten Werte an eine Auswerte- und Steuereinheit weiterleiten, welche Stellsignale für mindestens eine Stabilisierungsfunktion des Zugfahrzeugs 10 erzeugt.

Die Messeinrichtung 18 ist vorzugsweise als iBolt-Einheit ausgeführt, welche mindestens einen absolut messenden Sensor aufweist. Auch hierbei wird die auf die zugfahrzeugseitige Kupplungseinheit 14 wirkende Kraft aktiv und vorzugsweise kontinuierlich erfasst.

## Patentansprüche

1. Anordnung zur Verbindung eines Zugfahrzeugs mit einem Anhänger mit einer zugfahrzeugseitigen Kupplungseinheit (14) und einer anhängerseitigen Kupplungseinheit, wobei der zugfahrzeugseitigen Kupplungseinheit (14) eine Messeinrichtung (18) zugeordnet ist, welche die auf die zugfahrzeugseitige Kupplungseinheit (14) wirkende Kraft in mindestens einer Richtung (16) erfasst und auswertet, wobei die Messeinrichtung (18) mit einer Wegfahrsperre (22) gekoppelt ist, welche eine Inbetriebnahme und/oder ein Inbewegungsetzen des Zugfahrzeugs (10) verhindert, wenn die von der Messeinrichtung (18) erfasste Kraft und/oder eine daraus ermittelte physikalische Größe einen vorgegebenen Schwellwert überschreitet, **dadurch gekennzeichnet, dass**
die Messeinrichtung (18) die Kraftmessung beim Einschalten einer Zündung und/oder während des Fahrbetriebs und/oder im Stillstand des Zugfahrzeugs (10) durchführt, wobei die Messeinrichtung (18) die Wegfahrsperre (22) nur bei einem erkannten Fahrzeugstillstand aktiviert.

2. Verbindungsanordnung nach Anspruch 1, **dadurch gekennzeichnet, dass** die Messeinrichtung (18) die erfassten Werte mit zulässigen Maximalwerten für eine Anhängelast und/oder eine Stützlast vergleicht, welche für das Zugfahrzeug (10) vorgegeben sind.

3. Verbindungsanordnung nach einem der Ansprüche 1 oder 2, **dadurch gekennzeichnet, dass** die Wegfahrsperre (22) zur Verhinderung der Inbetriebnahme und/oder der Bewegung des Zugfahrzeugs (10) mit einer Zündungseinrichtung (34) und/oder einer Kraftstoffzufuhreinrichtung (28) und/oder einem Motorsteuergerät (32) und/oder einer Pedaleinrichtung (26) gekoppelt ist.

4. Verbindungsanordnung nach einem der Ansprüche 1 bis 3, **dadurch gekennzeichnet, dass** die Messeinrichtung (18) die erfassten Werte dem Fahrer des Zugfahrzeugs (10) über mindestens eine Ausgabeeinheit (24) anzeigt.

5. Verbindungsanordnung nach Anspruch 4, **dadurch gekennzeichnet, dass** die Messeinrichtung (18) vor der Aktivierung der Wegfahrsperre (22) über die mindestens eine Ausgabeeinheit (24) eine Warnung an den Fahrer des Zugfahrzeugs (10) ausgibt.

6. Verbindungsanordnung nach Anspruch 4 oder 5, **dadurch gekennzeichnet, dass** die Messeinrichtung (18) während des Fahrbetriebs über die mindestens eine Ausgabeeinheit (24) eine Warnung an den Fahrer des Zugfahrzeugs (10) ausgibt, wenn die während des Fahrbetriebs erfassten Werte die zulässigen Maximalwerte für die Anhängelast und/oder die Stützlast überschreiten.

7. Verbindungsanordnung nach einem der Ansprüche 1 bis 6, **dadurch gekennzeichnet, dass** die Messeinrichtung (18) die erfassten Werte an eine Auswerte- und Steuereinheit weiterleitet, welche Stellsignale für mindestens eine Stabilisierungsfunktion des Zugfahrzeugs (10) erzeugt.

8. Verbindungsanordnung nach einem der Ansprüche 1 bis 7, **dadurch gekennzeichnet, dass** die zugfahrzeugseitige Kupplungseinheit (14) fest oder abnehmbar mit dem Aufbau (12) des Zugfahrzeugs (10) verbunden ist, wobei bei einer abnehmbaren Ausführung die zugfahrzeugseitige Kupplungseinheit (14) über die Messeinrichtung (18) mit einem Aufbau (12) des Zugfahrzeugs (10) verbunden ist.

9. Verbindungsanordnung nach Anspruch 1, **dadurch gekennzeichnet, dass** die Messeinrichtung (18) als iBolt-Einheit ausgeführt ist, welche mindestens einen absolut messenden Sensor aufweist.

## Claims

1. Assembly for connecting a traction vehicle to a trailer, comprising a coupling unit (14) on the traction vehicle side and a coupling unit on the trailer side, wherein the coupling unit (14) on the traction vehicle side is assigned a measuring device (18), which records and evaluates the force acting on the coupling unit (14) on the traction vehicle side in at least one direction (16), wherein the measuring device (18) is coupled to an immobilizer (22), which prevents the traction vehicle (10) from being started up and/or set in motion when the force recorded by the measuring device (18) and/or a physical variable determined therefrom exceeds a predetermined threshold value, **characterized in that**
the measuring device (18) carries out the force measurement when switching on an ignition and/or during driving and/or at a standstill of the traction vehicle (10), the measuring device (18) activating the immobilize (22) only in response to a detected vehicle standstill.

2. Connecting assembly according to Claim 1, **characterized in that** the measuring device (18) compares the recorded values with permissible maximum values for a towed weight and/or a drawbar load that are prescribed for the traction vehicle (10).

3. Connecting assembly according to either of Claims 1 and 2, **characterized in that**, to prevent the traction vehicle (10) from starting and/or moving, the immobilizer (22) is coupled to an ignition device (34) and/or a fuel feed device (28) and/or an engine control unit (32) and/or a pedal device (26).

4. Connecting assembly according to one of Claims 1 to 3, **characterized in that** the measuring device (18) indicates the recorded values to the driver of the traction vehicle (10) via at least one output unit (24).

5. Connecting assembly according to Claim 4, **characterized in that**, prior to activation of the immobilizer (22), the measuring device (18) outputs a warning to the driver of the traction vehicle (10) via the at least one output unit (24).

6. Connecting assembly according to Claim 4 or 5, **characterized in that**, during driving, the measuring device (18) outputs a warning to the driver of the traction vehicle (10) via the at least one output unit (24) if the values recorded during driving exceed the maximum permissible values for the towed weight and/or the drawbar load.

7. Connecting assembly according to one of Claims 1 to 6, **characterized in that** the measuring device (18) passes on the recorded values to an evaluation and control unit that generates actuating signals for at least one stabilizing function of the traction vehicle (10).

8. Connecting assembly according to one of Claims 1 to 7, **characterized in that** the coupling unit (14) on the traction vehicle side is permanently or detachably connected to the superstructure (12) of the traction vehicle (10), wherein, in the case of a detachable design, the coupling unit (14) on the traction vehicle side is connected to a superstructure (12) of the traction vehicle (10) via the measuring device (18).

9. Connecting assembly according to Claim 1, **characterized in that** the measuring device (18) is designed as an iBolt unit that has at least one absolutely measuring sensor.

## Revendications

1. Ensemble d'attelage d'un véhicule tracteur à une remorque, comprenant une unité d'accouplement (14) du côté du véhicule tracteur et une unité d'accouplement du côté de la remorque, l'unité d'accouplement (14) du côté du véhicule tracteur étant associée à un dispositif de mesure (18) qui détecte et analyse la force agissant sur l'unité d'accouplement (14) du côté du véhicule tracteur dans au moins une direction (16), le dispositif de mesure (18) étant accouplé à un dispositif d'immobilisation (22) qui empêche un démarrage et/ou une mise en mouvement du véhicule tracteur (10) lorsque la force détectée par le dispositif de mesure (18) et/ou une grandeur physique déterminée à partir de celle-ci dépassent une valeur seuil prédéfinie,
**caractérisé en ce que**
le dispositif de mesure (18) effectue la mesure de force lors du lancement d'un allumage et/ou en mode de conduite et/ou à l'arrêt du véhicule tracteur (10), le dispositif de mesure (18) n'activant le dispositif d'immobilisation (22) que lorsqu'un arrêt du véhicule est reconnu.

2. Ensemble d'attelage selon la revendication 1, **caractérisé en ce que** le dispositif de mesure (18) compare les valeurs détectées à des valeurs maximales admissibles pour une charge de la remorque et/ou une charge de support, lesquelles sont prédéfinies pour le véhicule tracteur (10).

3. Ensemble d'attelage selon la revendication 1 ou 2, **caractérisé en ce que** le dispositif d'immobilisation (22), pour empêcher le démarrage et/ou le déplacement du véhicule tracteur (10), est couplé à un dispositif d'allumage (34) et/ou à un dispositif d'alimentation en carburant (28) et/ou à un appareil de commande de moteur (32) et/ou à un dispositif de pédale (26).

4. Ensemble d'attelage selon l'une quelconque des revendications 1 à 3, **caractérisé en ce que** le dispositif de mesure (18) indique les valeurs détectées au conducteur du véhicule tracteur (10) par le biais d'au moins une unité d'émission (24).

5. Ensemble d'attelage selon la revendication 4, **caractérisé en ce que** le dispositif de mesure (18) émet, avant l'activation du dispositif d'immobilisation (22), par le biais d'au moins une unité d'émission (24), un avertissement au conducteur du véhicule tracteur (10).

6. Ensemble d'attelage selon la revendication 4 ou 5, **caractérisé en ce que** le dispositif de mesure (18) émet, en mode de conduite, par le biais de l'au moins une unité d'émission (24), un avertissement au conducteur du véhicule tracteur (10) si les valeurs détectées en mode de conduite dépassent les valeurs maximales admissibles pour la charge de remorque et/ou la charge de support.

7. Ensemble d'attelage selon l'une quelconque des revendications 1 à 6, **caractérisé en ce que** le dispositif de mesure (18) transmet les valeurs détectées à une unité d'analyse et de commande qui génère des signaux de réglage pour au moins une fonction de stabilisation du véhicule tracteur (10).

8. Ensemble d'attelage selon l'une quelconque des revendications 1 à 7, **caractérisé en ce que** l'unité d'accouplement (14) du côté du véhicule tracteur est connectée fixement ou de manière amovible à la caisse (12) du véhicule tracteur (10), l'unité d'accouplement (14) du côté du véhicule tracteur, dans le cas d'une réalisation amovible, étant connectée par le biais du dispositif de mesure (18) à une caisse (12) du véhicule tracteur (10).

9. Ensemble d'attelage selon la revendication 1, **caractérisé en ce que** le dispositif de mesure (18) est réalisé sous forme d'unité iBolt qui présente au moins un capteur de mesure absolue.
